# EUROPEAN PATENT APPLICATION

(11) **EP 2 190 167 A1**
(43) Date of publication of application: **26.05.2010**
(21) Application number: 08846694.1
(22) Date of filing: 27.10.2008
(51) Int. Cl.: H04L 29/08

(54) **METHOD, DEVICE AND SYSTEM FOR REQUEST AND RESPONSE OF P2P OVERLAY NETWORK**

(30) Priority: 29.10.2007 CN 200710165109
(71) Applicant: Huawei Technologies Co., Ltd., Longgang District, Shenzhen Guangdong 518129 (CN)
(72) Inventor: JIANG, Xingfeng, B1-3A, Bantian, Longgang District 518129 Shenzhen (CN)
(74) Representative: Kreuz, Georg Maria
(86) International application number: PCT/CN2008/072843
(87) International publication number: WO 2009/059525

(57) **Abstract**

A method, an apparatus, and a system for answering requests in a Peer-to-Peer (P2P) overlay network are disclosed. The method includes the following steps: the destination peer receives a request that carries an address of an intermediate peer, processes the request and generates an answer, and sends the answer to the intermediate peer according to the address of the intermediate peer in the request; and the intermediate peer forwards the answer to a peer that sends the request. The technical solution under the present invention solves the problem of Network Address Translation (NAT) in semi-recursive routing mode on a P2P overlay network.

## Description

### Cross-Reference to Related Application

This application claims priority to Chinese Patent Application No. 200710165109.0, filed with the Chinese Patent Office on October 29, 2007 and entitled "Method, Apparatus, and System for Answering Requests on Peer-to-Peer Overlay Network", which is incorporated herein by reference in its entirety.

### Field of the Invention

The present invention relates to computer network technologies, and in particular, to a method, an apparatus, and a system for answering requests in a Peer-to-Peer (P2P) overlay network.

### Background of the Invention

The P2P technology organizes plenty of peers into an overlay network. The Distributed Hash Table (DHT) is one of the overlay network organization technologies. In the DHT algorithms, Hash calculation is performed by using a Hash space for the peers on the overlay network and the resource information to be stored into the overlay network. The Hash value for identifying a peer on the overlay network is called a peer ID, and the Hash value for identifying resource information is called a key. Currently, the P2P Session Initiation Protocol (SIP) working group of the Internet Engineering Task Force (IETF) is developing a P2P SIP Peer protocol, which aims to standardize the behavior between the peers and enable the P2P overlay network to provide distributed database services. The peers or clients on the overlay network may use the distributed databases formed by the peers to store and access data, for example, store and access the SIP Uniform Resource Identifier (URI) and the associated Internet Protocol (IP) address information.

The message transmission on the P2P overlay network depends on the Hash value calculated with the specific DHT algorithm, and the Hash value may be a peer ID or a key. However, in transmission of the P2P message, each peer uses a message-related Hash value to search for the locally stored routing information and obtain the next-hop peer, and then sends the message to the selected peer. When receiving a message, each peer determines whether this peer is responsible for the key. If this peer is responsible for the key, the peer stops forwarding the message, and proceeds to the specific message processing process.

Currently, the message types supported by most DHT algorithms include: JOIN, LEAVE, GET, and PUT. In most P2P application systems, the transaction on the overlay network is performed by using a request and an answer to the request. For example, if peer A wants to know the information corresponding to the key K, peer A needs to send a GET request, and route the request on the overlay network. Peer A waits for an answer to the GET request, and determines whether the request succeeds. If the request succeeds, peer A obtains the information corresponding to the key K from the answer.

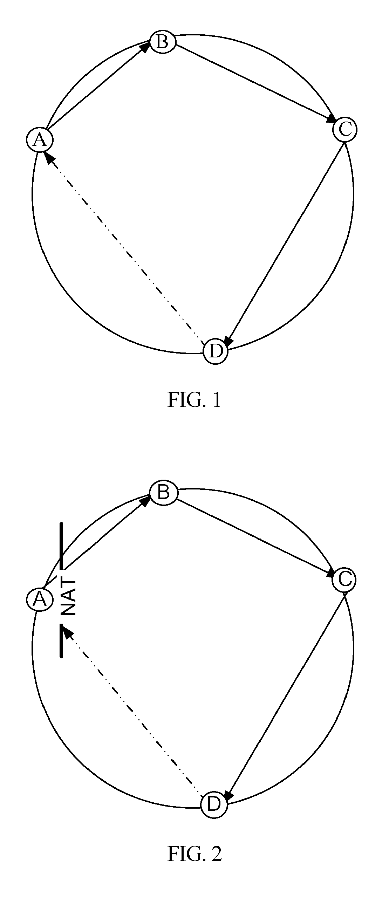

The request-and-answer communication modes in the P2P message transaction include iterative mode, recursive mode, and semi-recursive mode. From the perspective of the processing delay, the semi-recursive mode is the most efficient, and is the most prevalent currently. In semi-recursive communication mode, the request is forwarded on the P2P overlay network until the request arrives at the destination peer. The destination peer returns an answer to the sending peer over an IP route. FIG. 1 shows a semi-recursive communication mode. First, peer A generates a request that carries routing information of peer A and the required key, and sends the request to neighboring peer B. Peer B uses the request-related Hash value to search for the locally stored routing information and obtain next-hop neighboring peer C, and forwards the request to peer C; peer C uses the request-related Hash value to search for the locally stored routing information and obtain next-hop neighboring peer D, and forwards the request to peer D; peer D determines that peer ID itself is responsible for the key of this request, and generates an answer that carries information corresponding to the key, and sends the answer to peer A directly according to the routing information of peer A in the request. In the preceding process, peer A is a peer that sends the request, namely, a sending peer; and peer D is a peer that processes the request, namely, a destination peer.

Network Address Translation (NAT) baffles the communication between peers on the overlay network. For a stable overlay network, communication is enabled between neighboring peers even if NAT is required between the peers. However, in semi-recursive communication mode, the destination peer is usually not a neighbor of the sending peer, and the communication may fail if NAT is required between the two peers. As shown in FIG. 2, peer A sends a request; the request passes through peers B and C, and finally arrives at peer D. Peer D may return an answer to peer A according to the information about the IP address of peer A in the request. However, after NAT, the IP address carried in the request sent by peer A is a private IP address. If peer D is unable to translate the address correctly, the answer sent by peer D is discarded by the router or sent to a host other than peer A. Destination peer D is unable to return the answer to the sending peer A correctly.

### Summary of the Invention

Embodiments of the present invention provide a method, an apparatus, and a system for answering requests on a P2P overlay network to solve the problem of NAT traversal in semi-recursive mode on the P2P overlay network.

A method for answering requests on a P2P overlay network in an embodiment of the present invention includes:
receiving, a destination peer, a request that carries an address of an intermediate peer, processing the request and generating an answer, and sending the answer to the intermediate peer according to the address of the intermediate peer in the request;
   and
forwarding, by the intermediate peer, the answer to a sending peer that sends the request.

Another method for answering requests on a P2P overlay network in an embodiment of the present invention includes:
receiving, by an intermediate peer with a public IP address, a request from a sending peer, using a source IP address and a port number of the request as address information of the sending peer, and sending the request to another peer on the overlay network; and
receiving, by an intermediate peer, an answer from a destination peer, and sending the answer to the sending peer according to the address information of the sending peer.

A peer on a P2P overlay network in an embodiment of the present invention includes:
an intermediate-peer address information module, adapted to collect address information of peers directly connected with this peer on the overlay network and generate an intermediate-peer address table; and
a request processing module, adapted to add the address information in the intermediate-peer address table generated by the intermediate-peer address information module to a request.

Another peer on a P2P overlay network in an embodiment of the present invention includes:
an answering module, adapted to process a request received by the peer, and generate an answer; and
an answer sending module, adapted to send the answer generated by the answering module according to an intermediate-peer address in the request received by the peer.

Another peer on a P2P overlay network in an embodiment of the present invention includes:
a sending-peer address processing module, adapted to determine an address of a sending peer according to a source IP address and a port number in a request received by this peer;
a request forwarding module, adapted to forward the request received by the peer; and
an answer forwarding module, adapted to forward the answer received by the peer to the sending peer according to the sending peer address determined by the sending-peer address processing module.

A system for answering requests on a P2P overlay network in an embodiment of the present invention includes: a sending peer, a destination peer, and intermediate peers.
the sending peer adapted to generate a request that carries addresses of the intermediate peers, and send the request to a neighboring peer.
the destination peer adapted to receive the request forwarded by a peer on the overlay network, process the request and generate an answer, and send the answer to an intermediate peer according to the address of the intermediate peer in the request.
the intermediate peer adapted to forward the received answer to the sending peer.

Another system for answering requests on a P2P overlay network in an embodiment of the present invention includes: a sending peer, a destination peer, and intermediate peers.
the sending peer adapted to generate a request that carries addresses of the intermediate peers, and send the request to an intermediate peer.
the intermediate peer adapted to use a source IP address and a port number of the request as the address information of the sending peer, and send the request to a neighboring peer on the overlay network; receive an answer from the destination peer, and send the answer to the sending peer according to the address information of the sending peer.
the destination peer adapted to receive the request forwarded by the peer on the overlay network, process the request and generate an answer, and send the answer to the intermediate peer according to the address of the intermediate peer in the request.

As seen from the foregoing technical solution, the request sent by the sending peer carries the IP address information of an intermediate peer that can forward the answer; the destination peer sends the answer to the intermediate peer according to the address information of the intermediate peer in the request; and the intermediate peer forwards the answer, and thus solving the problem of NAT traversal in semi-recursive mode in the P2P overlay network.

### Brief Description of the Drawings

FIG. 1 shows a semi-recursive communication mode on a P2P overlay network in the prior art;
FIG. 2 shows a semi-recursive communication mode which fails on a P2P overlay network due to NAT in the prior art;
FIG. 3 shows a semi-recursive communication mode on a P2P overlay network in an embodiment of the present invention;
FIG. 4 is a flowchart of processing requests on a P2P overlay network in a first embodiment of the present invention; and
FIG. 5 is another flowchart of processing requests on a P2P overlay network in the first embodiment of the present invention.

### Detailed Description of the Invention

The technical solution under the present invention uses the direct connections established between the sending peer and the intermediate peers after NAT, and sends information by using a request to the destination peer, where the information is about the intermediate peers that are directly connected with the sending peer. In this way, the destination peer may forward the answer through such intermediate peers, and finally, the intermediate peers forward the answer to the sending peer. No NAT is required between the intermediate peer and the destination peer. The intermediate peer may be a peer or a public network server such as a TURN server.

To make the technical solution, objectives and merits of the present invention clearer, the following describes the embodiments of the present invention in detail with reference to the accompanying drawings.

The sending peer is on the overlay network, and is a functionally normal peer. Therefore, the routing information of the sending peer on the overlay network includes the information about the communication with some other peers on the overlay network. Regardless of NAT, if the sending peer is a functionally normal peer, the sending peer can directly communicate with the peers in its routing information. Some of such neighboring peers, for example, a public network node that has a public IP address, or a neighboring peer of the destination peer, may communicate with the destination peer correctly. Likewise, the sending peer may be directly connected with other public network nodes, and such public network nodes may be other than the peers on the overlay network, but such public network nodes can also forward the P2P message for the sending peer.

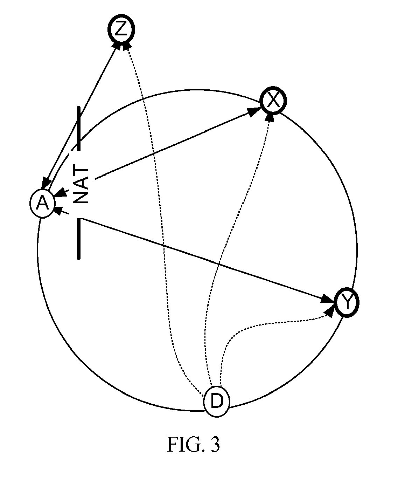

As shown in FIG. 3, node A is a sending peer, and node D is a destination peer. Node X and node Y are the neighboring peers of node A on the overlay network. Node Z is not a peer, but is directly connected with node A. The common features of node X, node Y, and node Z are as follows: They communicate with both node A and node D. In practice, node X, node Y, and node Z are usually the nodes with public IP address. Before sending a P2P request, node A determines that NAT may have been performed, and therefore, adds the address of the nodes directly connected with node A to the request. Such information is carried in the request to the destination peer D ultimately. Node D returns an answer after processing the request. Node D may choose to send the answer to node X, node Y, or node Z, and such nodes forward the answer to node A. In FIG. 3, the dotted line indicates the answer. Node D may send multiple answer messages to node X, node Y, and node Z at a single attempt, or to node X, node Y, and node Z sequentially.

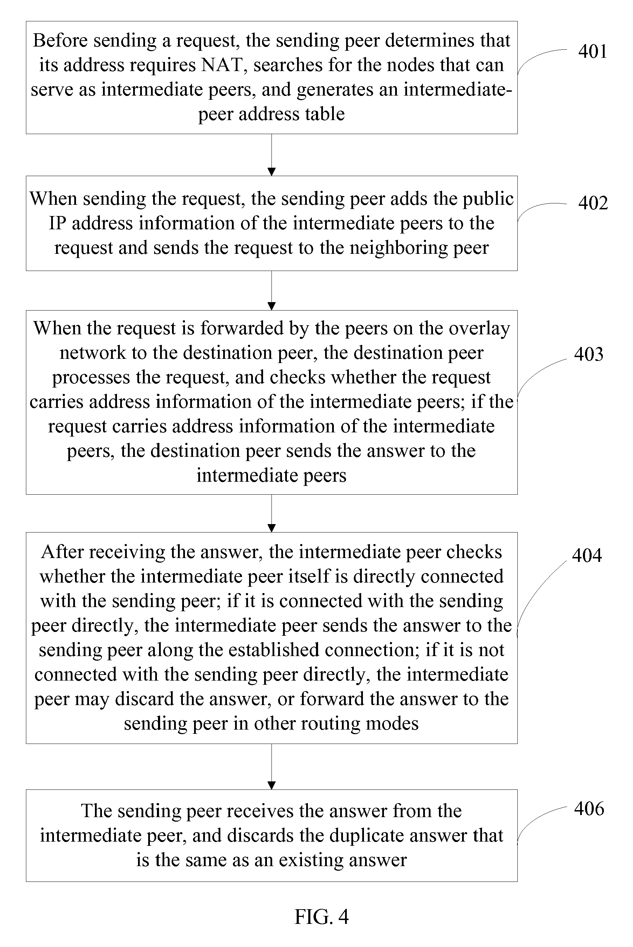

FIG. 4 shows a process of transmitting a request and an answer on a P2P overlay network in the first embodiment of the present invention. The process includes the following steps:
Step 401: The sending peer determines that its address information requires NAT, searches for the nodes that can serve as intermediate peers, and generates an intermediate-peer address table. The intermediate peers may be found out in the following way:
   1. Search for the routing information of the overlay network for any neighboring peer that has a public IP address. If such peers are found, select them as intermediate peers.
   2. Check whether the sending peer itself is connected with any server capable of forwarding messages in the public network. If such public network servers exist, select them as intermediate peers.

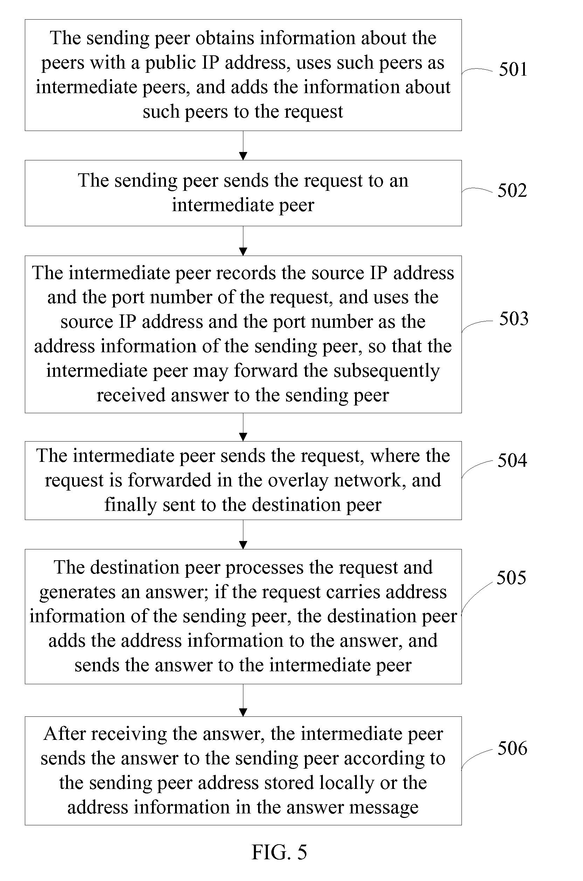

   The search methods given above are exemplary only, and the method for searching for intermediate peers is not limited to the preceding two methods.
   The step of searching for intermediate peers may be performed only once, and the intermediate peers are updated periodically later; or the step is performed before every sending of a request.
Step 402: When sending a request, the sending peer adds the public IP address information of the intermediate peers to the request and sends the request to the neighboring peer. The sending peer may set priorities for the public IP addresses according to properties of the intermediate peers. The priorities may be set according to the following principles:
   setting a higher priority for the neighboring peer, and set a lower priority for the public network server; and
   setting priorities according to the speed of connection between the intermediate peer and the sending peer, and set a higher priority for the intermediate peer that provides a higher connection speed.
Step 403: When the request is forwarded by the peers on the overlay network to the destination peer, the destination peer processes the request, and checks whether the request carries address information of the intermediate peers. If the request carries address information of the intermediate peers, the destination peer sends the answer to all intermediate peers concurrently or sequentially. If the IP address of each intermediate peer carries priority information, the answer may be sent to the intermediate peers sequentially according to the priority, or sent to only the intermediate peer of the highest priority.
Step 404: After receiving the answer, the intermediate peer checks whether the intermediate peer itself is directly connected with the sending peer. If the intermediate peer is connected with the sending peer directly, the intermediate peer sends the answer to the sending peer along the established connection. If the intermediate peer is not connected with the sending peer directly, the intermediate peer may discard the answer, or forward the answer to the sending peer in other routing modes.
Step 405: The sending peer receives the answer from the intermediate peer, and discards the answer that is the same as an existing answer.
   It is possible that all neighboring peers of the sending peer require NAT in some scenarios. For example, the sending peer and all its neighboring peers are in the same Local Area Network (LAN), or the sending peer sends a JOIN message but has not joined the overlay network and lacks the neighboring peer information. In such scenarios, the sending peer may send its own address information to the intermediate peer, and the answer is sent back with the cooperation of the sending peer and the intermediate peers. As shown in FIG. 5, the process of sending the request and the answer includes the following steps:
Step 501: The sending peer obtains the information about the peers with a public IP address, for example, obtains such information in out-band mode, and uses such peers as intermediate peers, and adds their address information to the request.
Step 502: The sending peer sends the request to an intermediate peer.
Step 503: The intermediate peer records the source IP address and the port number of the request, and uses the source IP address and the port number as the address information of the sending peer, so that the intermediate peer may forward the subsequently received answer to the sending peer. The intermediate peer may store the address information of the sending peer in local or add the address information to the request.
   Because the source IP address and the port number in the request require NAT, if the destination peer directly sends the answer to the address corresponding to the source IP address and the port number, the sending may fail. Considering that the intermediate peer can perform correct NAT for the source IP address and the port number, the destination peer sends the answer to the intermediate peer, and the intermediate peer forwards the answer. The intermediate peer adds the address information of the sending peer to the request for this purpose: If the intermediate peer stores no address information of the sending peer locally, the address information of the sending peer is carried in the request and sent to the destination peer; the destination peer adds the address information of the sending peer to the answer, and the intermediate peer can return the answer to the sending peer according to the address information of the sending peer in the answer.
Step 504: The intermediate peer sends the request, where the request is forwarded on the overlay network, and finally sent to the destination peer.
Step 505: The destination peer processes the request and generates an answer. If the request carries address information of the sending peer, the destination peer adds the address information to the answer, and sends the answer to the intermediate peer.
Step 506: After receiving the answer, the intermediate peer sends the answer to the sending peer according to the address information of the sending peer stored in local or the address information in the answer. If the intermediate peer is not connected with the sending peer, or if neither the answer nor the local provides the address information of the sending peer, the intermediate peer discards the answer.

A peer on a P2P overlay network is provided in the second embodiment of the present invention. The peer not only has the modules for generating, sending and forwarding a request, but also has the following modules:
an intermediate peer address information module, adapted to: collect address information of peers directly connected with this peer on the overlay network and generate an intermediate-peer address table; and
a request processing module, adapted to add the address information in the intermediate-peer address table generated by the intermediate-peer address information module to a request.

The request processing module of this peer further includes a judging unit, which is adapted to: judge whether the address of the peer requires NAT. If the judging unit determines that the address of the peer requires NAT, the request processing module adds an intermediate-peer address table to the request.

This peer is equivalent to the sending peer in the first embodiment.

A peer on a P2P overlay network is provided in the third embodiment of the present invention. The peer includes:
an answering module, adapted to: process a request received by this peer, and generate an answer; and
an answer sending module, adapted to send the answer generated by the answering module according to an intermediate-peer address in the request received by the peer.

This peer is equivalent to the destination peer in the first embodiment.

A peer on a P2P overlay network is provided in the fourth embodiment of the present invention. The peer includes:
a sending-peer address processing module, adapted to determine an address of a sending peer according to a source IP address and a port number in a request received by this peer;
a request forwarding module, adapted to forward the request received by the peer; and
an answer forwarding module, adapted to forward the answer received by the peer to the sending peer according to the sending peer address determined by the sending-peer address processing module.

The sending-peer address processing module further includes:
a recording unit, adapted to record the address of the sending peer.

Alternatively, the sending-peer address processing module further includes:
a sending peer address adding unit, adapted to add the address of the sending peer to the request to be forwarded by the request forwarding module.

In the technical solution under the present invention, the request sent by the sending peer carries the IP address information of an intermediate peer that can forward the answer; the destination peer sends the answer to the intermediate peer according to the address information of the intermediate peer in the request; and the intermediate peer forwards the answer, and thus solving the problem of NAT traversal in semi-recursive mode in the P2P overlay network.

Although the invention has been described through several exemplary embodiments, the invention is not limited to such embodiments. It is apparent that those skilled in the art can make modifications and variations to the invention without departing from the scope of the invention. The invention is intended to cover the modifications and variations provided that they fall in the scope of protection defined by the following claims or their equivalents.

## Claims

1. A method for answering requests on a Peer-to-Peer, P2P, overlay network, comprising:
receiving, by a destination peer, a request that carries an address of an intermediate peer, processing the request and generating an answer, and sending the answer to the intermediate peer; and
forwarding, by the intermediate peer, the answer to a sending peer that sends the request.

2. The method of claim 1, wherein before the destination peer receives the request that carries the address of the intermediate peer, the method further comprises:
if determining that an address of the sending peer requires Network Address Translation, NAT, the sending peer selecting an intermediate peer from a pre-generated intermediate-peer address table, and adding the address of the selected intermediate peer to the request.

3. The method of claim 2, wherein the step of generating the intermediate-peer address table comprises:
searching, by the sending peer, any neighboring peer that has a public Internet Protocol, IP, address in routing information of the overlay network; and addingIP addresses of the neighboring peers to the intermediate-peer address table if the neighboring peers are found; and/or
searching, by the sending peer, whether the sending peer itself is connected with any server capable of forwarding messages on a public network; and adding addresses of the public network servers to the intermediate-peer address table if the public network servers exist.

4. The method of claim 1, wherein if there is more than one intermediate peer, the step of sending the answer to the intermediate peer comprises:
sending the answer to all intermediate peers concurrently or sending the answer to all intermediate peers sequentially.

5. The method of claim 1, wherein: before the destination peer receives the request that carries the address of the intermediate peer, the method further comprises:
obtaining, by the sending peer, information of the peer with the public IP address in out-band mode, using the peer with the public IP address as an intermediate peer, adding the address of the intermediate peer to the request, and sending the request to the intermediate peer; and
adding, by the intermediate peer, a source IP address and a port number of the request to the request, and sending the request to a neighboring peer of the intermediate peer on the overlay network, wherein the request is forwarded among the peers of the overlay network and finally sent to the destination peer;
the step of the intermediate peer forwarding the answer to the sending peer comprises: sending, by the intermediate peer, the answer to the sending peer according to address information of the sending peer.

6. The method of claim 5, wherein:
the step of the intermediate peer using the source IP address and the port number of the request as the address information of the sending peer comprises: adding, by the intermediate peer, the address information of the sending peer to the request; and
after the request is forwarded among the peers of the overlay network and finally sent to the destination peer, the method further comprises: generating, by the destination peer, the answer according to the request, and adding the address information of the sending peer in the request to the answer.

7. The method of claim 5, wherein:
the step of the intermediate peer using the source IP address and the port number of the request as the address information of the sending peer comprises:
recording, by the intermediate peer, the address information of the sending peer in local; and
the step of the intermediate peer forwarding the answer to the sending peer comprises:
forwarding, by the intermediate peer, the answer to the sending peer according to the address information of the sending peer stored in local.

8. A method for answering requests on a Peer-to-Peer, P2P, overlay network, comprising:
receiving, by an intermediate peer with a public Internet Protocol, IP, address, a request from a sending peer, using a source IP address and a port number of the request as address information of the sending peer, and sending the request to a neighboring peer of the intermediate peer on the overlay network, wherein the request is forwarded among peers on the overlay network and finally sent to a destination peer; and
receiving, by an intermediate peer, an answer from the destination peer, and sending the answer to the sending peer according to the address information of the sending peer.

9. The method of claim 8, wherein:
the step of the intermediate peer using the source IP address and the port number of the request as the address information of the sending peer comprises: adding, by the intermediate peer, the address information of the sending peer to the request; and
after the request is forwarded among the peers of the overlay network and finally sent to the destination peer, the method further comprises: by the destination peer, generating the answer according to the request, and adding the address information of the sending peer in the request to the answer.

10. The method of claim 8, wherein:
the step of the intermediate peer using the source IP address and the port number of the request as the address information of the sending peer comprises:
recording, by the intermediate peer, the address information of the sending peer in a local directory;
and therefore, the step of the intermediate peer forwarding the answer to the sending peer comprises:
forwarding, by the intermediate peer, the answer to the sending peer according to the address information of the sending peer in the local directory.

11. The method of claim 8, wherein the step of the intermediate peer forwarding the answer to the sending peer comprises:
by the intermediate peer, receiving the answer and checking whether a connection exists between the intermediate peer and the sending peer, and sending the answer to the sending peer if such a connection exists.

12. A peer on a Peer-to-Peer, P2P, overlay network, comprising:
an intermediate-peer address information module, adapted to collect address information of peers connected with the peer on the overlay network and generate an intermediate-peer address table; and
a request processing module, adapted to add the address information in the intermediate-peer address table generated by the intermediate-peer address information module to a request.

13. The peer of claim 12, wherein:
the request processing module of the peer further comprises a judging unit, which is adapted to judge whether an address of the peer requires Network Address Translation, NAT, and, if the judging unit determines that the address of the peer requires NAT, add the intermediate-peer address table to the request.

14. A peer on a Peer-to-Peer, P2P, overlay network, comprising:
an answering module, adapted to: process a request received by the peer, and generate an answer; and
an answer sending module, adapted to send the answer generated by the answering module according to an intermediate-peer address in the request received by the peer.

15. A peer on a Peer-to-Peer, P2P, overlay network, comprising:
a sending-peer address processing module, adapted to determine an address of a sending peer according to a source Internet Protocol, IP, address and a port number in a request received by the peer;
a request forwarding module, adapted to forward the request received by the peer;
and
an answer forwarding module, adapted to forward the answer received by the peer to the sending peer according to the sending peer address determined by the sending-peer address processing module.

16. The peer of claim 15, wherein the sending-peer address processing module further comprises:
a recording unit, adapted to record the address of the sending peer.

17. The peer of claim 15, wherein the sending-peer address processing module further comprises:
a sending peer address adding unit, adapted to add the address of the sending peer to the request to be forwarded by the request forwarding module.

18. A system for answering requests on a Peer-to-Peer, P2P, overlay network, comprising:
a sending peer, adapted to: generate a request that carries addresses of intermediate peers, and send the request to a neighboring peer;
a destination peer, adapted to: receive the request forwarded by a peer on the overlay network, process the request and generate an answer, and send the answer to an intermediate peer according to the address of the intermediate peer in the request; and
the intermediate peer, adapted to forward the received answer to the sending peer.

19. A system for answering requests on a Peer-to-Peer, P2P, overlay network, comprising:
a sending peer, adapted to: generate a request that carries addresses of intermediate peers, and send the request to an intermediate peer;
the intermediate peer, adapted to: use a source Internet Protocol, IP, address and a port number of the request as address information of the sending peer, and send the request to a neighboring peer on the overlay network; receive an answer from a destination peer, and send the answer to the sending peer according to the address information of the sending peer; and
the destination peer, adapted to receive the request forwarded by a peer on the overlay network, process the request and generate the answer, and send the answer to the intermediate peer according to the address of the intermediate peer in the request.
